# EUROPEAN PATENT SPECIFICATION

(11) **EP 1 004 527 B1**
(45) Date of publication and mention of the grant of the patent: **03.11.2004**
(21) Application number: 99123129.1
(22) Date of filing: 19.11.1999
(51) Int. Cl.: B65G 65/00, B65G 39/07, B65G 13/071

(54) **Improved head for turning rollers, in boxes for containing ceramic products, particularly tiles, on stacked supporting surfaces**
Verbesserter Kopf für drehende Rollen, in Sammeleinheiten von keramischen Produkten, insbesondere Ziegel, auf übereinanderliegenden Trägeroberflächen
Tête améliorée pour des rouleaux tournants, dans des conteneurs de produits céramiques, spécialement des tuiles, sur des surfaces de support étagées

(30) Priority: 27.11.1998 IT MO980042 U
(43) Date of publication of application: 31.05.2000
(73) Proprietor: GRUPPO BARBIERI & TAROZZI S.r.l., 41043 Formigine (Modena) (IT)
(72) Inventor: Tarozzi, Fausto, 20145 Milano (IT)
(74) Representative: Burrows, Anthony Gregory

(56) References cited:
- DE-A- 3 320 737
- US-A- 2 156 395
- US-A- 3 608 876
- US-A- 4 582 464
- US-A- 4 887 707

## Description

The present invention relates to an improved head for turning rollers, in boxes for containing ceramic products, particularly tiles, on stacked supporting surfaces.

Trolleys having a grid-like structure, known in the jargon as boxes, have long been employed to contain on stacked supporting surfaces a plurality of ceramic products, particularly tiles, in order to transfer them to the several processing stations.

These boxes are composed in practice of a quadrangular footing provided with ground resting means from which two parallel side walls rise vertically; several free rollers are supported between the side walls, simply rest in corresponding rows and columns of cavities formed in an orderly arrangement in said side walls and form the different stacked supporting surfaces on which the products are rested.

The ends of the rollers intentionally protrude by a certain extent and are engaged in various ways by elements which raise them and motorize them so that the rollers of a given supporting surface rotate simultaneously; these elements are carried on board one or two mechanical arms which protrude from a machine under which the boxes are alternately arranged for loading or unloading the products; the arms arrange themselves to the sides of said boxes indeed in order to alternately engage and disengage said ends of the rollers.

A lot of solutions provide said engagement in practice: some provide for a mechanical coupling between said ends of the rollers and said mechanical elements; other solutions provide for contact and motion transmission by mutual grip between the ends of the rollers and corresponding segments of complementary rollers supported on board said arms.

The latter type of embodiment of the roller movement means is currently the one that has the lowest execution costs and is structurally the simplest in absolute terms: in practice, each working arm supports multiple pairs of complementary roller segments, all of which are mutually aligned horizontally, have parallel axes and can be motorized so as to rotate simultaneously.

The center distances between each pair of said complementary rollers is such that it is smaller than the diameter of each roller of the boxes; accordingly, in order to motorize them the arm moves so as to align itself with the side wall of the box at a level located directly below the ends of the rollers that constitute the supporting surface to be motorized; then the arm is raised slightly and each end of said rollers of the box is rested and engaged between the corresponding pair of complementary roller segments and is lifted by them.

Finally, the complementary roller segments are turned simultaneously by the driving elements of the machine and the rotary motion is then transmitted to all the rollers of one supporting surface of the box, receiving or expelling the products automatically in this way.

Said complementary roller segments are provided with heads made of a high-grip material so as to avoid slippage between them and the surfaces of the rollers that are in mutual contact.

Owing to the considerable weight of the products loaded onto each supporting surface, to the rotation rates of the rollers and complementary rollers, and to the countless operating cycles to which they are subjected, said heads wear out very quickly and it is therefore necessary to periodically replace them.

Said heads are fitted on said complementary rollers in different ways and each type of fitting entails a specific operating sequence in order to perform said replacement.

In a first fitting solution, each head is composed of an elastomeric sleeve which is vulcanized onto the end of the complementary roller and is rotationally rigidly coupled thereto by means of a transverse monolithic element obtained by pouring said elastomer through an adapted hole provided in said complementary roller.

In a second conventional embodiment, the sleeve, if made of rubber or rubber derivatives, is fitted directly onto the end of the complementary roller and is also vulcanized directly on said end; the necessary rotationally rigid coupling is entrusted, in this case, purely to the grip produced between the inner rubber surface of the sleeve and the outer surface of the metal of the complementary roller.

In a third solution, the elastomeric sleeve is fitted on a bush which is in turn fitted onto the complementary roller and is fixed thereto with an end screw; a coupling is provided, between the bush and the elastomeric sleeve, between at least one transverse tooth which engages in a corresponding cutout seat.

Finally, in a simplified solution the elastomeric sleeve is simply push-fitted directly onto the complementary roller and in this case there is absolutely no coupling to insure rigid rotational association.

In the first and second fitting described above, the problem that occurs when the elastomeric head is to be replaced is that for heads vulcanized directly on the complementary roller or for heads provided with a transverse element it is necessary to replace the entire complementary roller.

In the third case, in which the elastomeric head is fitted on a bush, only the head-bush assembly is replaced, but in order to complete this operation it is necessary to unscrew and then screw back in place a considerable number of fixing screws.

In summary, the operation for replacing said heads is, as a whole, very complicated and resource-consuming and requires operations which take a long time to complete.

The aim of the present invention is to solve the above-described problems of the prior art by providing an improved head for turning rollers in boxes for containing ceramic products, particularly tiles, on stacked supporting surfaces which is easy and rapid to replace, has a simple structure and is cheap to manufacture.

This aim, object and others are achieved by an improved head for turning rollers in boxes for containing ceramic products, particularly tiles, on stacked supporting surfaces, characterized in that it is constituted by a cylindrical elastomeric sleeve which can be fitted directly onto the protruding end of a complementary roller and is internally provided with transverse diaphragm means which can be coupled to corresponding slot means formed at the tip of the end of the complementary roller, said coupling being adapted to cause said head and said complementary roller to rotate jointly together.

Further characteristics and advantages will become apparent from the following description of a preferred embodiment of an improved head for turning rollers in boxes for containing ceramic products, particularly tiles, on stacked supporting surfaces, illustrated only by way of non-limitative example in the accompanying drawings, wherein:

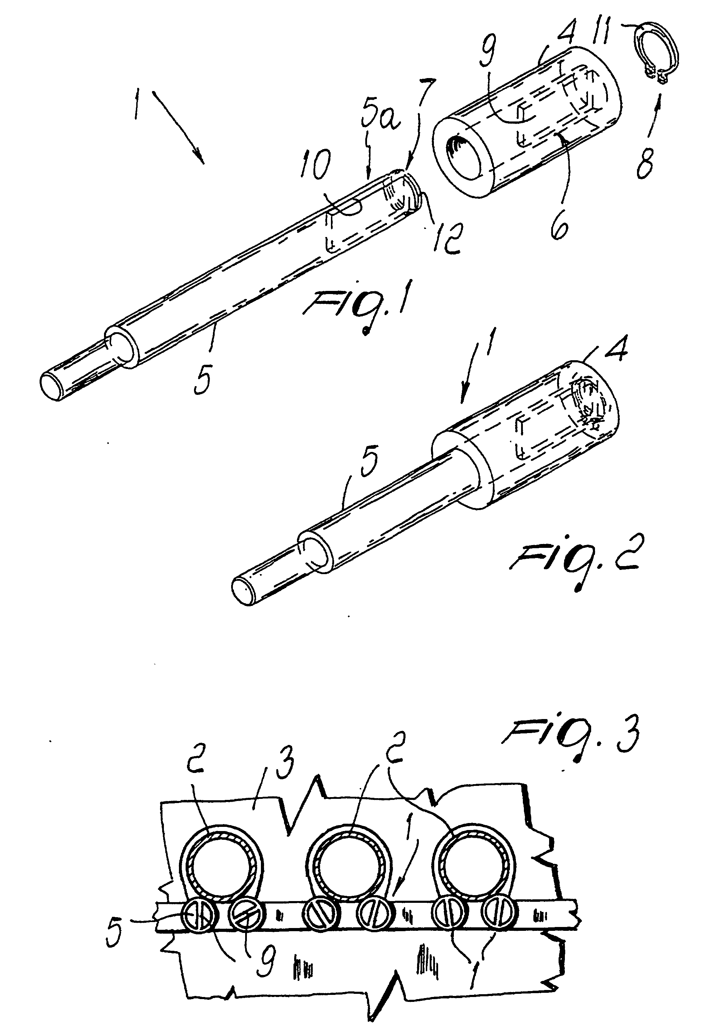

Figure 1 is an exploded view of a complementary roller provided with an improved head according to the invention during assembly;
Figure 2 is a corresponding view thereof in the assembled configuration;
Figure 3 is a schematic view of a step of the use of the heads according to the invention for moving rollers of a containment box.

With reference to the above-described figures, the reference numeral 1 designates an improved head for rotating the rollers 2 in containment boxes 3 with stacked supporting surfaces, particularly for ceramic tiles.

The head 1 is essentially constituted by a cylindrical elastomeric sleeve 4 which can be fitted directly onto the protruding end 5a of a complementary roller 5.

The head 1 is provided internally with transverse diaphragm means 6 which can be coupled to corresponding slot means 7 which are correspondingly formed at the tip of said end 5a of the complementary roller 5.

Removable means 8 are provided between the cylindrical sleeve 4 and the complementary roller 5 in order to lock the axial outward sliding of the sleeve 4 on the complementary roller 5.

The transverse diaphragm means 6 are constituted by a lamina 9 which is arranged diametrically inside the sleeve 4; in a preferred embodiment thereof, the lamina 9 is monolithic with respect to the sleeve, but according to the requirements it may also be provided separately and fitted subsequently and retained by push-fit coupling inside the sleeve 4.

Correspondingly, the slot means 7 are constituted by at least one diametrical cutout 10 which is formed at the tip of said complementary roller 5 and runs towards the centerline thereof for an extent which is equal to the length of the lamina 9.

Finally, the removable means 8 for locking the axial sliding of the sleeve 4 on the complementary roller 5 are constituted by a ring 11, known as snap ring, which can be inserted in a corresponding groove 12 formed perimetrically at the protruding end 5a of the complementary roller 5 directly in front of the sleeve 4.

The operation of the invention is evident: a corresponding elastomeric sleeve 4 can be fitted snugly on the end 5a of each complementary roller 5.

The lamina 9 engages in the cutout 10 until it abuts against the bottom thereof; the lengths of the lamina 9 and of the cutout 10 are such that when the lamina reaches said abutment the sleeve 4 is completely fitted onto the end 5a with a slight additional gap on which the groove 12 is formed perimetrically, the snap ring 11 being fitted in said groove 12 in order to lock the sleeve 4 on the complementary roller 5.

When each complementary roller 5 is turned together with the other matching complementary rollers, the coupling between the laminas 9 and the cutouts 10 rigidly associates the heads 1 with the respective complementary rollers, avoiding any rotary slippage between them.

When the sleeves 4 are worn and need to be replaced, it is sufficient to remove the slip rings 11 from the grooves 12, remove said worn sleeves 4 and insert new ones, locking them against axial sliding by inserting the snap rings 11 again.

In practice it has been observed that the above-described invention achieves the intended aim.

The invention thus conceived is susceptible of several modifications and variations, all of which are within the scope of the inventive concept.

All the details may further be replaced with other technically equivalent ones.

In practice, the materials employed, as well as the shapes and the dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A head for turning rollers in boxes for containing ceramic products, particularly tiles, on stacked supporting surfaces, **characterized in that** it is constituted by a cylindrical elastomeric sleeve (4) which can be fitted directly onto the protruding end (5a) of a complementary roller (5) and is internally provided with transverse diaphragm means (6) which can be coupled to corresponding slot means (7) formed at the tip of said end (5a) of the complementary roller (5), said coupling being adapted to cause said head (1) and said complementary roller (5) to rotate jointly together.

2. The head according to claim 1, **characterized in that** removable means (8) for locking the axial sliding of the sleeve (4) on the complementary roller (5) are provided between said cylindrical sleeve (4) and said complementary roller (5).

3. The head according to claim 1 or 2, **characterized in that** said transverse diaphragm means (6) are constituted by a lamina (9) arranged diametrically inside said sleeve (4).

4. The head according to claim 3, **characterized in that** said lamina (9) is formed monolithically together with said sleeve (4).

5. The head according to claim 3, **characterized in that** said lamina (9) can be push-fitted into said sleeve (4).

6. The head according to claim 3, 4 or 5, **characterized in that** said lamina (9) is as long as the sleeve (4).

7. The head according to any preceding claim, **characterized in that** said head can be coupled to said slot means (7) constituted by at least one diametrical cutout (10) formed at the tip of said complementary roller (5).

8. The head according to claim 7 as appended to claim 3, **characterized in that** said lamina (9) and said cutout (10) are mutually engaged in the configuration in which the sleeve (4) is fitted on the complementary roller (5).

9. The head according to claim 8, **characterized in that** said lamina (9) and said cutout (10) have substantially identical and interpenetrating dimensions and profiles.

## Patentansprüche

1. Kopf zum Drehen von Rollen in Behältern zum Aufnehmen keramischer Produkte, insbesondere Ziegel, auf übereinanderliegenden Trägeroberflächen, **dadurch gekennzeichnet, dass** er durch eine zylindrische elastomere Buchse (4) gebildet ist, die direkt auf das vorstehende Ende (5a) einer komplementären Rolle (5) aufsteckbar ist und innerlich mit Quermembranmitteln (6) versehen ist, die mit entsprechenden Nutmitteln (7) koppelbar sind, die an der Spitze des Endes (5a) der komplementären Rolle (5) gebildet sind, wobei die Kopplung angepasst ist, den Kopf (1) gemeinsam mit der komplementären Rolle (5) drehen zu lassen.

2. Kopf gemäß Anspruch 1, **dadurch gekennzeichnet, dass** entfernbare Mittel (8) zum Sperren des axialen Gleitens der Buchse (4) auf der komplementären Rolle (5) zwischen der zylindrischen Buchse (4) und der komplementären Rolle (5) vorgesehen sind.

3. Kopf gemäß Anspruch 1 oder 2, **dadurch gekennzeichnet, dass** die Quermembranmittel (6) durch ein Plättchen (9) gebildet sind, das diametral in der Buchse (4) angeordnet ist.

4. Kopf gemäß Anspruch 3, **dadurch gekennzeichnet, dass** das Plättchen (9) monolithisch zusammen mit der Buchse (4) gebildet ist.

5. Kopf gemäß Anspruch 3, **dadurch gekennzeichnet, dass** das Plättchen (9) mittels Drücken in die Buchse (4) steckbar ist.

6. Kopf gemäß Anspruch 3, 4 oder 5, **dadurch gekennzeichnet, dass** das Plättchen (9) so lange wie die Buchse (4) ist.

7. Kopf gemäß einem der vorhergehenden Ansprüche, **dadurch gekennzeichnet, dass** der Kopf mit den Nutmitteln (7) koppelbar ist, die zumindest durch einen diametrischen Ausschnitt (10) gebildet sind, der bei der Spitze der komplementären Rolle (5) gebildet ist.

8. Kopf gemäß Anspruch 7, soweit dieser auf Anspruch 3 rückbezogen ist, **dadurch gekennzeichnet, dass** das Plättchen (9) und der Ausschnitt (10) in der Konfiguration, bei der die Buchse (4) auf die komplementäre Rolle (5) gesteckt ist, gegenseitig im Eingriff sind.

9. Kopf gemäß Anspruch 8, **dadurch gekennzeichnet, dass** das Plättchen (9) und der Ausschnitt (10) im Wesentlichen identische und sich gegenseitig durchdringende Ausmaße und Profile aufweisen.

## Revendications

1. Tête pour faire tourner des rouleaux dans des bacs destinés à contenir des produits en céramique, en particulier des carreaux, sur des surfaces de support empilées, *caractérisée en ce qu*'elle est constituée d'un manchon élastomère cylindrique (4) qui peut être installé directement sur l'extrémité saillante (5a) d'un rouleau complémentaire (5) et est munie intérieurement de moyens de diaphragme transversal (6) qui peuvent être couplés à des moyens d'encoche correspondants (7) formés à la pointe de ladite extrémité (5a) du rouleau complémentaire (5), ledit couplage étant adapté pour que ladite tête (1) et ledit rouleau complémentaire (5) tournent conjointement.

2. Tête selon la revendication 1, ***caractérisée en ce que*** des moyens amovibles (8) pour bloquer le coulissement axial du manchon (4) sur le rouleau complémentaire (5) sont prévus entre ledit manchon cylindrique (4) et ledit rouleau complémentaire (5).

3. Tête selon la revendication 1 ou 2, ***caractérisée en ce que*** lesdits moyens de diaphragme transversal (6) sont constitués par une lame (9) disposée diamétralement à l'intérieur dudit manchon (4).

4. Tête selon la revendication 3, ***caractérisée en ce que*** ladite lame (9) est formée de manière monolithique avec ledit manchon (4).

5. Tête selon la revendication 3, ***caractérisée en ce que*** ladite lame (9) peut être mise en place par pression dans ledit manchon (4).

6. Tête selon la revendication 3, 4, ou 5, ***caractérisée en ce que*** ladite lame (9) est aussi longue que le manchon (4).

7. Tête selon l'une quelconque des revendications précédentes, ***caractérisée en ce que*** ladite tête peut être couplée auxdits moyens d'encoche (7) constitués par au moins une découpe diamétrale (10) formée à la pointe dudit rouleau complémentaire (5).

8. Tête selon la revendication 7 lorsqu'elle est liée à la revendication 3, ***caractérisée en ce que*** ladite lame (9) et ladite découpe (10) sont engagées mutuellement dans la configuration dans laquelle le manchon (4) est placé sur le rouleau complémentaire (5).

9. Tête selon la revendication 8, ***caractérisée en ce que*** ladite lame (9) et ladite découpe (10) ont des dimensions et des profils substantiellement identiques et s'interpénétrant.
